# EUROPÄISCHE PATENTSCHRIFT

(11) **EP 0 834 155 B1**
(45) Veröffentlichungstag und Bekanntmachung des Hinweises auf die Patenterteilung: **02.05.2001**
(21) Anmeldenummer: 96914086.2
(22) Anmeldetag: 18.05.1996
(51) Int. Cl.: G06K 17/00

(54) **VERFAHREN ZUR AUSGABE VON CHIPKARTEN**
METHOD OF DISPENSING SMART CARDS
PROCEDE DE DISTRIBUTION DE CARTES A PUCE

(30) Priorität: 18.05.1995 DE 19517818
(43) Veröffentlichungstag der Anmeldung: 08.04.1998
(73) Patentinhaber: Angewandte Digital Elektronik GmbH, 21521 Dassendorf (DE)
(72) Erfinder: KREFT, Hans-Dietrich, D-21521 Dassendorf (DE)
(74) Vertreter: Mierswa, Klaus, Dipl.-Ing.
(86) Internationale Anmeldenummer: DE9600870
(87) Internationale Veröffentlichungsnummer: WO9636936

(56) Entgegenhaltungen:
- EP-A- 0 266 926
- WO-A-93/04433
- WO-A-94/15306

## Beschreibung

### Technisches Gebiet:

Die Erfindung betrifft ein Verfahren zur Ausgabe von individuellen Chipkarten an eine Mehrzahl von einzelnen Chipkartennutzer, unter Verwendung einer Chipkartenausgabestation mit wenigstens einem Vorratsbehälter gemäß dem Oberbegriff des Anspruchs 1.

### Stand der Technik:

Durch die EP 0 428 233 A1 ist ein Verfahren und eine Vorrichtung zur Ausgabe von Chipkarten bekannt geworden, auf denen Informationen elektromagnetisch gespeichert und lesbar sind; ebenso sind visuelle Informationen vorhanden, die zur Identifikation des Trägers der Karte dienen. Die elektromagnetisch lesbare Information und die visuelle Information sind auf verschiedenen Schichten der Chipkarte angeordnet, die in einer vollständig geschlossenen Umhüllung angeordnet sind. Eine Vorrichtung zur Herstellung solcher Chipkarten umfaßt eine zentrale Prozessoreinheit, eine daran angeschlossene Videokamera sowie eine Distributeurmaschine, die ebenfalls mit der Prozessoreinheit verbunden ist. Die Distributeurmaschine umfaßt einen Drucker, um ein Bild, welches von der Videokamera aufgenommen worden ist, auf einen geeigneten Träger zu drucken, wobei das Bild durch die Prozessoreinheit in elektrische Signale umgewandelt wird, sowie ein Magazin, in welchem eine Vielzahl von elektromagnetisch programmierbaren Trägern angeordnet sind. Die Distributeurmaschine umfaßt des weiteren eine Einrichtung, um eine tranparente Hüllschicht rund um den Träger und die Bildtragschicht aufzubringen, die das Bild enthält um so Träger und Bildtragschicht miteinander zu verbinden.

Durch die DE 30 44 463 C2 ist ein Verfahren und eine Vorrichtung zum individuellen Codieren von Karten bekannt, von denen jede Karteeinen ihr individuell zugeordneten Kartencode, zum Beispiel eine Seriennummer, in lesbarer Form trägt, mit dessen Hilfe und mit Hilfe eines personenspezifischen Geheimcodes, PIN, gemäß vorgegebener Algorithmen ein Ausgabeoffsetcode gebildet wird, der in ablesbarer Form auf der Karte aufgezeichnet wird. Der PIN-Code wird von der Person individuell vorgegeben und mit einem personenspezifischen offenen Code, z. B. einer Kontonummer, gemäß einem vorgegebenen ersten Algorithmus verschlüsselt, um einen Anfangsoffsetcode zu erzeugen, der mit einem institutionsspezifischen Geheimcode verschlüsselt wird, um einen Hilfsoffsetcode zu erzeugen. Der Hilfsoffsetcode wird gemäß einem dritten Algorithmus mit dem von der Karte abgelesenen individuellen Kartencode verschlüsselt, um den Ausgabeoffsetcode zu erzeugen.

Durch die DE 93 10 231.3 U1 ist eine Informationsanlage für den Fremdenverkehr bekannt geworden mit einem Anzeigesystem mit Datenverarbeitungseinheit mit Speicher, Bildschirm, Zahlentastatur, Funktionstasten, Bildtafeln mit Plan und Übersicht und einer Anordnung von verschiedenen Systemkomponenten in einem Informationsträger sowie Modem und/oder Schnittstelle unter Herstellung eines Datenverbundes mit Ausdrucksmöglichkeit.

Durch die WO 93/04433 ist ein standartisiertes modulares Kartenausgabesystem bekannt geworden, bei welchem Module mechanisch und elektrisch miteinander verbunden sind, um eine Vorrichtung zur Ausgabe von spezifisch personalisierten Karten zu bilden. Dazu ist ein Kontroller mit einem Kommunikationsbus mit Eingabetastatur und Monitor verbunden, der es dem Kontroller gestattet, personalisierende Daten von verschiedenen Kartenherstellungsmodulen abzunehmen und aufzugeben, um dadurch verschieden codierte, personalisierte Karten herzustellen. Es handelt sich dabei immer um Chipkarten ein und desselben Chipkartenausgebers.

### Technische Aufgabe:

Der Erfindung liegt die Aufgabe zugrunde, die automatisierte Ausgabe von individuellen Chipkarten an einen zunächst unbekannten Kartennutzer für eine Mehrzahl von Chipkartenanbieter bzw. Leistungsanbieter nach individuellen Bedürfnissen eines Kartennutzers in einfacher und effizienter Weise zu ermöglichen.

### Offenbarung der Erfindung und deren Vorteile:

Diese Aufgabe wird erfindungsgemäß dadurch gelöst, daß über einen leitungsgebundenen und/oder funkgebundenen aktiven Datenanschluß mit einer von entfernt aufgestellten automatischen oder von Menschen geführten Prüf- oder Überwachungsstationen unterschiedlicher Kartenanbieter eine Verbindung hergestellt wird und die persönlichen Daten zu der entfernten Prüf- oder Überwachungsstation des ausgewählten Kartenanbieters übertragen werden, wobei die Programme und/oder Daten der Chipkartenausgabestation per rückübersandter Daten und/oder Programme von der ausgewählten entfernten Prüf- oder Überwachungsstation veränderbar sind und das Laden der Chipkarte mit Programmen und/oder Daten in Abhängigkeit von den von der entfernten Prüf- oder Überwachungsstation eingehenden Programmen und/oder Daten geschieht, so daß der das Menü bedienende Kartennutzer seine individuelle Chipkarte von dem von ihm ausgewählten Kartenanbieter aus der Chipkartenausgabestation zur Nutzung erhält.

Während bisher Chipkarten über Banken, Kreditkartenorganisationen oder Firmen direkt an einen bekannten Kartennutzer ausgegeben werden, ermöglicht die Erfindung in vorteilhafter Weise die Ausgabe von Chipkarten an einen zunächst unbekannten Kartennutzer, wobei an einer Chipkartenausgabestation der unbekannte Kartennutzer sich einen Überblick über verschiedene Kartenanbieter, Karteneigenschaften und ihre Vorteile verschaffen kann. Danach kann die geeignete Karte unter verschiedenen Anbietern ausgewählt und in einer Prozedur der Karteninitialisierung und Kartenpersonalisierung die Karte aus einem Kartenvorrat für einen bestimmten Zweck und/oder eines spezifischen Kartenanbieters ausgegeben werden.

Es werden drei Zeiten unterschieden. Vor dem Zeitpunkt t1 liegen Karten im Magazin einer Chipkartenausgabestation für eine Vielzahl von Kartennutzern vor. Während der Zeitspanne △t, welche zwischen t1 und der späteren Zeit t2 liegt, wird eine bestimmte Karte für einen bestimmten Benutzer ausgewählt und hergerichtet, die zu einer Zeit nach t2 in üblichen Kartenendgeräten genutzt werden kann.

In einem Magazin als Vorratsbehälter der Chipkartenausgabestation sind Chipkarten zu einem Zeitpunkt t1 gelagert. Die Chipkarten enthalten zum Zeitpunkt t1 diejenigen elektronischen Bauelemente, deren Funktionen viele unbestimmte und unbekannte Kartennutzer vor dem Zeitpunkt t1 zur Erfüllung von Chipkartenanwendungen nachfragen. Damit ist gewährleistet, daß die Chipkartenausgabestation Chipkarten enthält, wie sie üblicherweise am Markt nachgefragt werden.

Das Laden der Chipkarte mit Daten und die Ausgabe der Chipkarte an Kartennutzer geschieht über ein Bedienmenü. Zwischen Menü und Kartennutzer findet eine Kommunikation derart statt, daß das Bedienmenü das Verfahren der Ladung und der Kartenausgabe in seinem Ablauf eindeutig und wiederholbar für unterschiedlichste Kartennutzer vorgibt. Die Vorgänge laufen bei jedem Menülauf in wiederholbarer Weise ab. Derart ist patentgemäß gewährleistet, daß nur solche Maßnahmen unterschiedlicher Bediener and der Chipkartenausgabestation erfolgen, welche per Menü zugelassen sind.

Während der Zeit Δt ist die Chipkartenausgabestation über einen leitungsgebundenen und/oder funkgebundenen aktiven Datenanschluß mit einem entfernt aufgestellten automatischen oder von Menschen geführten Prüf- oder Überwachungsstation verbunden. Für die Ausgabe von Chipkarten sind Überprüfungen des Kartennutzers erforderlich. Insbesondere ist die Identität eines Kartennutzers zu überprüfen, da ausgeschlossen sein muß, daß ein Kartennutzer mit den persönlichen Daten eines anderen Kartennutzers sich eine Karte initialisiert. Ist die eindeutig vorgegebene Verfahrensweise des Bedienmenüs in ihrem Ablauf über Programme in der Chipkartenausgabestation beeinflußbar und können während der Zeit Δt die Programme und Daten der Chipkartenausgabestation über den Datenanschluß geladen und/ oder geändert und/oder ausgewählt werden, ist der Ablauf der Vorgänge an der Chipkartenausgabestation durch Vorgaben der entfernten Station zu beeinflussen. Damit ist erfindungsgemäß gewährleistet, daß die Ausgabe von Karten an Kartennutzer an einer Chipkartenausgabestation von einer für die Karten und ihre Eigenschaften verantwortlichen Stelle geregelt wird; der persönliche Kontakt zwischen einem Mitarbeiter einer Chipkarten ausgeben-den Stelle und einem Kartennutzer wird ersetzt durch eine Kommunikation über einen Datenanschluß.

Der Kartennutzer kann in der Zeit Δt über das Bedienmenü per Datenleitung individuelle, personenspezifische und nur ihm bekannte oder persönlich zugehörige Merkmale in die Chipkartenausgabestation eingeben. Diese Daten werden während der Zeit △t von der Chipkartenausgabestation zur entfernten Station übertragen und können dort überprüft werden. In Abhängigkeit von diesen übertragenen Daten können die Programme und/oder Daten der Chipkartenausgabestation per rückübersandter Daten und/oder Programme von der entfernten Station verändert werden. Damit ist eine individuelle Einstellung des Menüablaufes von der entfernten Station möglich. Beispielsweise kann in Abhängigkeit von dem Alter des Kartennutzers der Ablauf verändert werden. Auch das Laden der Chipkarte mit Programmen und/oder Daten ist derart in Abhängigkeit von den von der entfernten Station eingehenden Programmen und/oder Daten ermöglicht. Es können derart Chipkarten mit denjenigen Daten geladen werden, die der Kartennutzer per Menü nachfragt, oder welche die entfernte Station in die Karten laden möchte.

Ein Ziel der Bedienung der Chipkartenausgabestation ist die Initialisierung, d.h. die erstmalige funktionale Aktivierung einer Chipkarte. Beispielsweise muß ein bestimmter Zahlencode in die Chipkarte eingegeben werden, damit sie erstmals Daten aufnimmt. Derart ist gesichert, daß Chipkarten nur von den entfernten Stellen aktiviert werden können, welche den Code zu ihrer Öffnung, d.h. ihrer funktionalen Aktivierung besitzen. Dies geschieht erfindungsgemäß durch Programme und/oder Daten der entfernten Station. Ein weiteres Ziel ist die Personalisierung der Chipkarte, d.h. die erstmalige Ladung der Chipkarte mit Programmen und/oder Daten, die dem Kartennutzer der Chipkarte eindeutig zugeordnet sind und ihn als berechtigten Kartennutzer der Chipkarte identifizieren.

Mit dem Verfahren wird die Auswahl einer bestimmten Chipkarte aus dem Magazin so erfolgen, daß der das Menü bedienende Kartennutzer seine individuelle, unverwechselbare Chipkarte zum Zeitpunkt t2 erhält. Diese Chipkarte entspricht seinen per Menü eingegebenen Vorgaben, so daß die Chipkarte zu einem Zeitpunkt nach t2 gemäß seinen Vorstellungen zu nutzen ist. Gleichzeitig wird eine entfernt aufgestellte Prüfstelle die ordnungsgemäße Ausgabe der Karte kontrollieren und Daten über die ausgegebene Karte für Kontrollzwecke ablegen können.

Vorteilhaft ist die Chipkartenausgabestation mit einem optischen/elektronischem Aufnahmegerät zur Aufnahme von Bildern und/oder Personen und/oder Dokumenten ausgestattet. Die aufgenommenen Bilder können zur entfernten Station übertragen werden. Damit ist gewährleistet, daß ein Kartennutzer an der Chipkartenausgabestation beispielsweise per Videoeinrichtung auch entfernt zu erkennen ist. Es sind mit der Aufnahmeeinrichtung auch Per-sonalausweise oder sonstige Papiere, schriftliche Informationen zu übertragen. Auch das Leisten einer Unterschrift ist zu übertragen. Die Authentisierung, d.h. die Berechtigung der richtigen Person zum Erhalt einer Karte kann derart gewährleistet werden.

Die Chipkartenausgabestation ist des weiteren mit einer Kartenbedruckstation ausgerüstet, so daß die Oberfläche der Karte per Aufdruck in ihrem Aussehen unterschiedlich gestaltet werden kann. Es können beispielsweise videotechnisch aufgenommene Bilder des Kartennutzers per Kartenbedruckstation auf die Kartenoberfläche aufgebracht werden. Die Karte kann derart auf ihrer Oberfläche ein unverwechselbares Aussehen erhalten. Ebenso kann die Chipkartenausgabestation die optisch/elektronisch aufgenommene Daten in der Chipkarte speichern. Damit können Persönlichkeitsmerkmale, wie das Bild des Kartennutzers, in den Speicher einer Chipkarte eingegeben werden.

Dazu ist die Chipkartenausgabestation mit einer numerischen Tastatur zur Eingabe von Zahlen und/oder Buchstaben und/oder beliebigen Zeichen ausgerüstet. DieEingabeeinerZahlalsGeheimnummer (PIN) während der Kartenpersonalisierung in die Karte ist damit gewährleistet. Der Kartennutzer verfügt über das Wissen, welche Zahl eingegeben werden muß, falls bestimmte Funktionen der Chipkarte abgerufen werden sollen. Das Verfahren ist dem bei heutigen Magnetstreifenkarten vergleichbar.

Die Chipkartenausgabestation verfügt erfindungsgemäß über eine Schreib-/ Lesestation für Chipkarten, welche in der gleichen Weise funktioniert, wie im Markt befindliche übliche Chipkartenendgeräte. Derart ist es möglich, eine von der Chipkartenausgabestation ausgegebene Chipkarte über eine Aufforderung des Bedienmenüs nach dem Zeitpunkt t2 in der Schreib/Lesestation in ihrer Funktion zu kontrollieren. Im Falle eines Fehlers kann die Karte beispielsweise ungültig gemacht werden.

Die in die Schreib-/Lesestation gesteckte Chipkarte kann auch per entfernt aufgestelltem Überwachungssystem überprüft werden. Die weitere Nutzung kann von den zurückübersandten Daten der entfernte Station abhängig gemacht werden.

Die Chipkartenausgabestation kann einen installierten Drucker enthalten, der einen Belegausdruck über die vom Kartennutzer getätigten Aktionen erstellt. Damit ist es möglich, die in der Chipkartenausgabestation gespeicherten Daten auszudrucken oder wahlweise die Daten der Karte und deren Speicherinhalte auszudrucken. Der Kartennutzer erhält somit einen Beleg über seine getätigten Vorgänge und Kartenspeicherinhalte.

Die Chipkartenausgabestation verfügt des weiteren über Langzeitspeicher und kann damit alle Aktionen und genutzten Daten für spätere Einsicht speichern.

Die Chipkartenausgabestation verfügt daneben über eine Magnetstreifenschreib- und/Leseeinrichtung. Es können derart auch Karten mit Magnet-streifen von der Chipkartenausgabestation ausgegeben werden. Die Vorgänge können in gleicher Weise ablaufen wie für Chipkarten vorstehend beschrieben. Der Unterschied ist lediglich, daß zum Chip in der Karte zusätzlich ein Magnet-streifen in der bekannten Form vorhanden ist. Derart können Chipkarten mit Magnetstreifen an der Chipkartenausgabestation ausgegeben werden. Es können auch unbeschriebene Magnetstreifen per Magnetstreifenschreibgerät beschrieben werden.

Die Chipkartenausgabestation kann über mehrere voneinander getrennte Magazine verfügen, in denen je nach technischer Ausstattung und je nach Karten-ausgeber unterschiedliche Karten vorhanden sind; der Kartennutzer kann eine Karte gemäß seinen Vorstellungen aussuchen. Beispielsweise kann eine kontaktfreie Karte ausgesucht werden, welche von einem Anbieter speziell für Anwendungen im Verkehrsbereich angeboten werden kann.

Per Menü kann über die entfernt stehende Station ein Konto bei einer Bank oder einer anderen Oganisation für den Kartennutzer eröffnet werden. Dies ist bei neu ausgegebenen Chipkarten häufig das Ziel der Karten anbietenden Organisation. Der Vorteil des Verfahrens besteht darin, daß der Kartennutzer die unterschiedlichen Karten und ihre Leistungen an einem oder unterschiedlichen Chipkartenausgabestation en während der Zeit t begutachten kann, ohne mit einem bestimmten Kartenausgeber in Kontakt treten zu müssen. Der Wettbewerb der Kartenanbieter spielt sich im neutralen Umfeld der Chipkartenausgabestation ab.

Die Karten der Chipkartenausgabestation können spezifische Vorinitialisierungen enthalten, welche in der Form von Daten in der Karte enthalten sind. Damit sind für den Kartennutzer bei bestimmten Dienstleistungsanbietern besondere Vorteile bei der Nutzung einer bestimmten Karte möglich. Beispielsweise können Limitbeträge oder Fahrscheinpunkte für den öffentlichen Nahverkehr bereits in der Karte enthalten sein, um eine schnelle und sinnvolle Nutzung der Karte zu ermöglichen.

Zwecks persönlicher Beratung kann die Chipkartenausgabestation per Telefonverbindung mit einem Operator verbunden sein. In einer persönlichen Kommunikation zwischen Kartennutzer und Operator können Fragen erörtert werden, die das sachgemäße Erstellen einer Karte für den Kartennutzer erleichtern.

Die Chipkartenausgabestation kann eine Einrichtung zum automatischen Einlesen von biometrischen Merkmalen enthalten. Damit ist gewährleistet, daß ein Kartennutzer sich beispielsweise durch das Einlesen seines Fingerabdruckes identifizieren kann.

Die Chipkartenausgabestation kann automatisch je nach Auswahl einer bestimmten Karte aus dem Magazin unterschiedliche, entfernt stehenden Stationen anwählen. Damit ist gewährleistet, daß die jeweilige für die ausgewählte Karte verantwortliche Organisation die Menüführung beeinflussen kann.

Die Chipkartenausgabestation bedarf zu ihrer Aktivierung der Eingabe eines Codes in Form einer Zahl und/oder eines Wortes und/oder des Einlesens einer Chipkarte und/oder eines mechanischen/elektronischen Codeträgers. In der Chipkartenausgabestation kann dieser Code mit einem dort vorliegenden nach algorithmischen Verfahren verglichen (entschlüsselt) werden und erst nach Übereinstimmung (nach Entschlüsselung) der Codes können die Funktionen der Chipkartenausgabestation aktiviert werden. Damit soll ein unberechtigtes Benutzen der Station ausgeschlossen werden.

Die Chipkartenausgabestation kann einen unverwechselbaren Code gespeichert haben, der in die Speicher von zu initialisierenden Karten übertragen werden kann. Damit sind die den Code enthaltenden Karten als eindeutig zugehörig zu der spezifischen Chipkartenausgabestation zu identifizieren.

### Gewerbliche Anwendbarkeit und Nützlichkeit:

Die Erfindung ist zur Ausgabe von Chipkarten von unterschiedlichen Chipkartenanbietern an Kartennutzer gewerblich anwendbar. Die Nützlichkeit der Erfindung besteht insbesondere darin, daß die Chipkarten in nicht bestimmter Weise ohne Zuordnung zu einem bestimmten Chipkartenanbieter und ohne Zuordnung zu einer bestimmten Chipkartennutzung vorrätig sind und anschließend vom Kartennutzer in völlig individueller Weise für sich oder auch eine bestimmte, andere Person ausgestellt werden können, wobei der Kartennutzer den Chipkartenanbieter anonym auswählen kann.

## Patentansprüche

1. Verfahren zur Ausgabe von individuellen Chipkarten an eine Mehrzahl von einzelnen Chipkartennutzer, unter Verwendung einer Chipkartenausgabestation mit wenigstens einem Vorratsbehälter, in welchem Chipkarten gelagert sind, die diejenigen elektronischen Bauelemente enthalten, deren Funktionen von den Kartennutzern zur Erfüllung von Chipkartenanwendungen nachgefragt werden, zur nachfolgenden Verwendung der Chipkarten in externen Schreib-/Lesestationen, wobei die Chipkartenausgabestation zum Zwecke der Ladung einer Chipkarte mit Daten über ein Bedienmenü mit dem Kartennutzer kommuniziert, der über das Bedienmenü individuelle, personenspezifische oder persönlich anhaftende Merkmale in die Chipkartenausgabestation eingibt, dadurch gekennzeichnet,
daß über einen leitungsgebundenen und/oder funkgebundenen aktiven Datenanschluß mit einer von entfernt aufgestellten automatischen oder von Menschen geführten Prüf- oder Überwachungsstationen unterschiedlicher Kartenanbieter eine Verbindung hergestellt wird und die persönlichen Daten zu der entfernten Prüf- oder Überwachungsstation des ausgewählten Kartenanbieters übertragen werden, wobei die Programme und/oder Daten der Chipkartenausgabestation per rückübersandter Daten und/oder Programme von der ausgewählten entfernten Prüf- oder Überwachungsstation veränderbar sind und das Laden der Chipkarte mit Programmen und/oder Daten in Abhängigkeit von den von der entfernten Prüf- oder Überwachungsstation eingehenden Programmen und/oder Daten geschieht, so daß der das Menü bedienende Kartennutzer seine individuelle Chipkarte von dem von ihm ausgewählten Kartenanbieter aus der Chipkartenausgabestation zur Nutzung erhält.

2. Verfahren nach Anspruch 1, dadurch gekennzeichnet,
daß die erstmalige funktionale Aktivierung der Chipkarte, nämlich Initialisierung, innerhalb der Chipkartenausgabestation durch Programme und/oder Daten der entfernt aufgestellten Prüf- oder Überwachungsstation bestimmt wird.

3. Verfahren nach Anspruch 1 oder 2, dadurch gekennzeichnet,
daß zur Personalisierung der Chipkarte dieselbe erstmalig mit Programmen und/oder Daten geladen wird, die dem Kartennutzer der Chipkarte eindeutig zugeordnet sind und ihn als Kartennutzer der Chipkarte identifizieren.

4. Verfahren nach Anspruch 3, dadurch gekennzeichnet,
daß zur Personalisierung der Chipkarte über das Bedienmenü in die Chipkartenausgabestation eine Zahl als Geheimnummer, wie PIN-Nummer, eingegeben und in die Karte gespeichert wird.

5. Verfahren nach Anspruch 1 oder 2, dadurch gekennzeichnet,
daß die Chipkartenausgabestation eine Schreib-/Lesestation für Chipkarten enthält, und das Bedienmenü den Kartennutzer auffordert, die Chipkarte in die Schreib/Lesestation zwecks Kontrolle der Kartenfunktionen der Chipkarte zu stecken.

6. Verfahren nach Anspruch 5, dadurch gekennzeichnet,
daß die in die Schreib/Lesestation gesteckte Chipkarte per entfernt aufgestellter Prüf- oder Überwachungsstation überprüft wird, wobei die weitere Nutzung der Chipkarte von den rückübersandten Daten der entfernten Prüf- oder Überwachungsstation abhängt.

7. Verfahren gemäß Anspruch 1, dadurch gekennzeichnet,
daß die Chipkartenausgabestation über mehrere voneinander getrennte Magazine verfügt, wobei in jedem Magazin unterschiedliche Chipkarten nach technischer Kartenausführung und unterschiedlichen Kartenanbietern vorgehalten werden und die Chipkartenausgabestation je nach Auswahl einer bestimmten Karte automatisch zu unterschiedlichen, entfernt stehenden Prüfoder Überwachungsstationen eine Verbindung herstellt.

8. Verfahren gemäß Anspruch 1, dadurch gekennzeichnet,
daß die Chipkarten der Chipkartenausgabestation spezifische Vorinitialisierungen in Form von Daten enthalten, welche für den Kartennutzer bei bestimmten Dienstleistungsanbietern besondere Vorteile bei der Nutzung der Chipkarte erbringen.

9. Verfahren nach Anspruch 1, dadurch gekennzeichnet,
daß die Chipkartenausgabestation einen Drucker enthält, der einen Belegausdruck über die vom Kartennutzer getätigten Aktionen ausdruckt, wobei die in der Chipkartenausgabestation gespeicherten Daten sowie die Daten der Chipkarte und deren Speicherinhalte ausgedruckt werden.

10. Verfahren nach Anspruch 1, dadurch gekennzeichnet,
daß die Chipkartenausgabestation über Langzeitspeicher verfügt, so daß alle Aktionen und Daten für eine spätere Auswertung zur Verfügung stehen.

11. Verfahren nach Anspruch 1, dadurch gekennzeichnet,
daß die Chipkartenausgabestation über eine Magnetstreifenschreib- und/ Leseeinrichtung verfügt zur Ausgabe von Chipkarten mit Magnetstreifen.

12. Verfahren nach Anspruch 1, dadurch gekennzeichnet,
daß per Menüführung der Chipkartenausgabestation über die entfernt stehende Prüf- oder Überwachungsstation ein Konto bei einer Bank oder einer anderen Organisation für den Kartennutzer eröffnet wird.

13. Verfahren nach Anspruch 1, dadurch gekennzeichnet,
daß die Chipkartenausgabestation eine Einrichtung zum automatischen Einlesen von biometrischen Merkmalen des Kartennutzers enthält.

14. Verfahren nach Anspruch 1, dadurch gekennzeichnet,
daß die Chipkartenausgabestation die Eingabe eines Codes in Form einer Zahl und/oder eines Wortes und/oder des Einlesens einer Chipkarte und/oder eines mechanischen/elektronischen Codeträgers bedarf, wobei der eingelesene Code mit einem Code in der Chipkartenausgabestation verglichen wird und erst nach Übereinstimmung der beiden Codes die Funktionen der Chipkartenausgabestation aktiviert werden.

15. Verfahren nach Anspruch 1, dadurch gekennzeichnet,
daß die Chipkartenausgabestation einen unverwechselbaren Code gespeichert hat, der in die Speicher von zu initialisierenden Chipkarten übertragen wird, womit die den Code enthaltenden Chipkarten als eindeutig zugehörig zu der Chipkartenausgabestation zu identifizieren sind.

16. Verfahren nach Anspruch 1, dadurch gekennzeichnet,
daß die Chipkartenausgabestation mit einem optisch/elektronischem Aufnahmegerät zur Aufnahme von Bildern von Personen und/oder Dokumenten ausgestattet ist, wobei die aufgenommenen Bilder zur entfernten Station übertragen werden und die Chipkartenausgabestation optisch/elektronisch aufgenommene Daten in der Chipkarte speichert.

## Claims

1. A process for dispensing individual chip cards to a plurality of individual chip card users, employing a chip card dispensing station with at least one storage container, storing chip cards in the chip card dispensing station wherein the chip cards contain electronic components with functions requested by card users for implementing chip card applications and wherein the chip cards are capable for use in external read-write stations, wherein the chip card dispensing station has a user menu for communication with a card user for purposes of loading the chip cards with data via the user menu by the card user able to enter individual, person-specific or person-related particulars into the chip card dispensing station,
characterized by
connecting the chip card dispensing station via a cable-linked and/or radio-linked active data connection to a remotely located verification or monitoring stations of diverse card issuers, which are either automated or operated by a person, transmitting the personal data to the remotely located verification or monitoring station whereby programs and/or data of the chip card dispensing station can be changed by back-transmitted data and/or programs from the remotely located verification or monitoring station, loading the chip cards with programs and/or data as a function of programs and/or data coming from the remotely located verification or monitoring station, issuing a loaded chip card of the selected card issuer to the card user operating the user menu and selected from the chip card dispensing station .

2. The process according to claim 1, wherein
a first-time functional activation of the loaded chip card is determined inside the chip card dispensing station by programs and/or data from the remotely located verification or monitoring station.

3. The process according to claim 1, wherein
in order to personalize the loaded chip card, the loaded chip card is loaded for the first time with programs and/or data, which are uniquely associated with the card user and which identify the card user as an entitled user of the loaded chip card.

4. The process according to claim 3, wherein
in order to personalize the loaded chip card, a PIN number is entered via the user menu into the chip card dispensing station as a secret number and stored in the loaded chip card.

5. The process according to claim 1, wherein
the chip card dispensing station has a read/write station for chip cards and the user menu asks the card user to insert the loaded chip card into the read/write station for purposes of checking the functions of the loaded chip card.

6. The process according to claim 5, wherein
the loaded chip card inserted into the read/write station is checked by the remotely located verification or monitoring station, whereby further utilization of the loaded chip card is contingent upon the back-transmitted data from the remote verification or monitoring station.

7. The process according to claim 1, wherein
the chip card dispensing station has several magazines, separated from each other, whereby different cards are present in each magazine, depending on technical card configuration and on different card issuers, and the chip card dispensing station automatically establishes a connection with various remotely located stations, depending on selection of a specific card from a selected magazine.

8. The process according to claim 1, wherein
the chip cards of the chip card dispensing station contain specific pre-initializations in a form of data, which entails special advantages with certain service providers for the card user when the card user uses the loaded chip card.

9. The process according to claim 1, wherein
the chip card dispensing station contains a printer that generates a confirmation slip on transactions made by the card user, whereby data stored in the chip card dispensing station as well as data of the loaded chip card and stored contents are printed out.

10. The process according to claim 1, wherein
the chip card dispensing station has a long-term memory and all of actions and data are available for a later review.

11. The process according to claim 1, wherein
the chip card dispensing station has a magnetic strip read/write device for dispensing chip cards with magnetic strips.

12. The process according to claim 1, wherein
via the user menu, an account at a bank or other organization is opened for the card user via the remotely located verification or monitoring station.

13. The process according to claim I, wherein
the chip card dispensing station contains a device for automatically reading in biometrics of the card user.

14. The process according to claim 1, wherein
the chip card dispensing station requires an entry of a code in a form of a number and/or of a word and/or reading in of a chip card and/or of a mechanical/electronic code carrier, whereby a read-in code is compared to a code in the chip card dispensing station and, only after two codes match, functions of the chip card dispensing station are activated.

15. The process according to claim 1, wherein
the chip card dispensing station has a distinct code stored in it that is transferred into a memory of the loaded chip card, as a result of which the loaded chip card containing the code can be clearly identified as belonging to a specific chip card dispensing station.

16. The process according to claim 1, wherein
the chip card dispensing station is equipped with an optical/electronic recording unit for photographing images and/or persons and/or documents, whereby recorded pictures are transmitted to the remotely located verification or monitoring station and the chip card dispensing station stores optically/electronically recorded data in the loaded chip card.

## Revendications

1. Procédé de distribution de cartes à puce personnalisées à une multitude d'utilisateurs de cartes à puce faisant appel à une station de distribution de cartes à puce dotée d'au moins un magasin dans lequel sont rangées des cartes à puce qui comportent les composants électroniques dont les fonctions sont demandées par les utilisateurs de cartes pour remplir les différentes applications des cartes à puce, pour l'utilisation subséquente des cartes à puce dans des terminaux de lecture-écriture externes, la station de distribution des cartes à puce communiquant via un menu avec l'utilisateurde la carte, afin de charger cette dernière d'informations, ledit utilisateur entrant dans la station de distribution des cartes à puce via ledit menu des caractéristiques spécifiques à sa personne ou personnalisées,
caractérisé en ce qu'une liaison est établie avec une station de contrôle ou de surveillance à distance à exploitation automatique ou humaine appartenant à l'un des différents fournisseurs de cartes, cela via une connexion active de transmission des données par ligne et/ou par radio et que les données personnelles sont transmises à la station de contrôle ou de surveillance à distance du fournisseur de cartes choisi, les programmes et/ou les données de la station de distributionde cartes à puce pouvant être modifiés par la station de contrôle ou de surveillance à distance choisie par les données et/ou les programmes renvoyées en retour et le chargement des programmes et/ou des données sur la carte à puce s'effectuant en fonction des programmes et/ou des données transmis par la station de contrôle ou de surveillance à distance, de sorte que l'utilisateurde la carte qui a activé les commandes du menu reçoive sa carte à puce personnelle par le fournisseur de cartes de son choix via la station de distribution de cartes à puces.

2. Procédé selon la revendication 1,
caractérisé en ce que l'activation initiale des fonctions de la carte à puce, à savoir l'initialisation,est déterminée à l'intérieur de la station de distribution de cartes à puce par les programmes et/ou les données de la station de contrôle ou de surveillance à distance.

3. Procédé selon la revendication 1 ou 2,
caractérisé en ce que, à des fins de personnalisation de la carte à puce, cette dernière est chargée pour la première fois de programmes et/ou de données qui sont assignés sans équivoqueà l'utilisateurde la carte à puce et l'identifientpar conséquent comme titulaire de la carte à puce.

4. Procédé selon la revendication 3,
caractérisé en ce que, à des fins de personnalisation de la carte à puce, un code secret, tel que le code PIN, est entré via le menu dans la station de distribution de cartes à puce et mémorisé dans la carte.

5. Procédé selon la revendication 1 ou 2,
caractérisé en ce que la station de distribution de cartes à puce comprend une unité de lecture-écriture de cartes à puce et que le menu invite l'utilisateur de la carte à insérer la carte à puce dans l'unité de lecture-écriture à des fins de contrôle des fonctions de la carte à puce.

6. Procédé selon la revendication 5,
caractérisé en ce que la carte à puce insérée dans l'unité de lecture-écriture est contrôlée par la station de contrôle ou de surveillance à distance, l'utilisation ultérieurede la carte à puce dépendant des données renvoyées en retour par la station de contrôle ou de surveillance à distance.

7. Procédé selon la revendication 1,
caractérisé en ce que la station de distribution de cartes à puce dispose de plusieurs magasins séparés, chacun de ces magasins contenant des cartes à puces différentes selon l'exécution technique et le fournisseur de cartes et que la station de distributionde cartes à puce établit automatiquement, en fonction de la carte choisie, une connexion aux stations différentes de contrôle ou de surveillance à distance.

8. Procédé selon la revendication 1,
caractérisé en ce que les cartes à puce de la station de distribution de cartes à puce contiennent des préinitialisations spécifiques sous forme de données qui, pour certains fournisseurs de services, offrent à l'utilisateur de la carte des avantages spéciaux lors de l'utilisationde la carte à puce.

9. Procédé selon la revendication 1,
caractérisé en ce que la station de distribution de cartes à puce comporte une imprimante qui sort un justificatif des actions effectuées par l'utilisateur de la carte, en imprimant les données stockées dans la station de distribution de cartes à puce ainsi que les données de la carte à puce et le contenu de sa mémoire.

10. Procédé selon la revendication 1,
caractérisé en ce que la station de distribution de cartes à puce dispose de mémoires de longue durée de sorte que toutes les actions et données sont accessibles pour une évaluation ultérieure.

11. Procédé selon la revendication 1,
caractérisé en ce que la station de distribution de cartes à puce dispose d'une unité d'enregistrement et de lecture de pistes magnétiques pour la distribution de cartes à puce avec piste magnétique.

12. Procédé selon la revendication 1,
caractérisé en ce que, par l'intermédiairedu menu de la station de distribution de cartes à puce, il est possible d'ouvrir un compte auprès d'une banque ou d'un autre organisme pour l'utilisateur de la carte via la station de contrôle ou de surveillance à distance.

13. Procédé selon la revendication 1,
caractérisé en ce que la station de distribution de cartes à puce comporte des moyens pour l'introductionautomatique par lecture de caractéristiques biométriques de l'utilisateurde la carte.

14. Procédé selon la revendication 1,
caractérisé en ce que la station de distribution de cartes à puce nécessite qu'un code sous forme de chiffre et/ou de mot soit entré et/ou qu'une carte à puce et/ou un support de code mécanique/électronique soit introduit par lecture, le code entré étant comparé à un code mémorisé dans la station de distribution de cartes à puce et les fonctions de la station de distribution de cartes à puce n'étant activées que si les deux codes coïncident.

15. Procédé selon la revendication 1,
caractérisé en ce que la station de distribution de cartes à puce a mémorisé un code qui est transmis dans les mémoires de cartes à puce à initialiser,de façon à ce que les cartes à puce contenant ledit code soient clairement identifiables comme relevant de ladite station de distributionde cartes à puce.

16. Procédé selon la revendication 1,
caractérisé en ce que la station de distributionde cartes à puce est équipée d'un appareil optique/électroniquede prise de vues de personnes et/ou de documents, les images prises étant transmises à la station à distance et la station de distribution de cartes à puce mémorisant sur la carte à puce des données enregistrées par voie optique/électronique.
